Europäisches Patentamt

European Patent Office

Office européen des brevets

(19)

(11) EP 0 683 607 B1

(12) EUROPÄISCHE PATENTSCHRIFT

(45) Veröffentlichungstag und Bekanntmachung des Hinweises auf die Patenterteilung:
20.01.1999 Patentblatt 1999/03

(51) Int Cl.6: H04N 5/44

(21) Anmeldenummer: 95106412.0

(22) Anmeldetag: 28.04.1995

(54) **Einrichtung zum Verarbeiten eines modulierten reellwertigen analogen Fernsehsignals**

Device for processing an analog television signal with real values

Dispositif pour le traitement d'un signal de télévision analogique à valeurs réelles

(84) Benannte Vertragsstaaten:
DE FR NL

(30) Priorität: 20.05.1994 DE 4417723

(43) Veröffentlichungstag der Anmeldung:
22.11.1995 Patentblatt 1995/47

(73) Patentinhaber: ROBERT BOSCH GMBH
70442 Stuttgart (DE)

(72) Erfinder: Göckler, Heinz, Dr.
D-71522 Backnang (DE)

(56) Entgegenhaltungen:
EP-A- 0 321 681          DE-A- 3 305 918
DE-A- 3 621 737

## Beschreibung

Die Erfindung bezieht sich auf eine Einrichtung zum Verarbeiten eines modulierten reellwertigen analogen Fernsehsignals, welches in Zwischenfrequenzlage vorliegt.

Aus der DE 33 05 918 C2 ist es bekannt, ein Fernsehsignal in Zwischenfrequenzlage mittels einem A/D-Wandler abzutasten und die weitere Verarbeitung, insbesondere die Demodulation, digital vorzunehmen. Die Frequenz des Abtastsignals beträgt hierbei weniger als das Doppelte der Trägerfrequenz.

Die EP 62 872 B1 zeigt die Signalverarbeitung eines abgetasteten Zwischenfrequenzsignals als komplexwertiges Digitalsignal.

Die ältere Patentanmeldung EP-A-0 651 526, veröffentlicht am 3.5.95, offenbart ein Verfahren zur Aufbereitung eines digitalen Frequenzmultiplexsignals aus Fernseh-Kanalsignalen. Die Kanalsignale werden überabgetastet, mittels eines komplexen Halbbandfilters gefiltert und mittels eines komplexen Mischers zur Weiterverarbeitung in der Frequenz verschoben. Mittels dieses komplexen Halbbandfilters wird auch eine Dezimation um den Faktor 1/2 vorgenommen.

Aufgabe der Erfindung ist es, die Einrichtung so auszubilden, daß eine digitale Demodulation der Fernsehsignale aufwandsarm möglich ist. Diese Aufgabe wird durch die Merkmale eines der Ansprüche 1 bis 3 gelöst. Vorteilhafte Ausgestaltungen sind in den Unteransprüchen aufgezeigt. Die Einrichtung nach der Erfindung gestattet eine komplette, einheitliche digitale Realisierung eines Bild- und Tondemodulators für Fernsehsignale. Die gemeinsame Vorverarbeitung zu einem komplexwertigen Ausgangssignal läßt eine flexible Weiterverarbeitung zu. So können Bild- und Tonanteile aufwandsarm weitgehend gemeinsam verarbeitet werden oder getrennt, um Störungen oder Filtertoleranzen gering zu halten.

Anhand der Zeichnungen werden nun Ausführungsbeispiele der Erfindung erläutert. Es zeigen

Figur 1 ein Blockschaltbild für eine digitale Vorverarbeitungsstufe mit einer ersten Ausführungsform für die Bild- und Tondemodulation,

Figur 2 eine Alternative für die digitale Vorverarbeitungsstufe mit einer zweiten Ausführungsform für die Bild- und Tondemodulation,

Figur 3 eine weitere Alternative für die digitale Vorverarbeitungsstufe mit einer dritten Ausführungsform für die Bild- und Tondemodulation,

Figur 4 das Signalspektrum des Fernsehsignals vor und nach der Abtastung,

Figur 5 ein Blockschaltbild einer Filterstruktur und

Figur 6 eine weitere Ausführungsform für die Bild- und Tondemodulation.

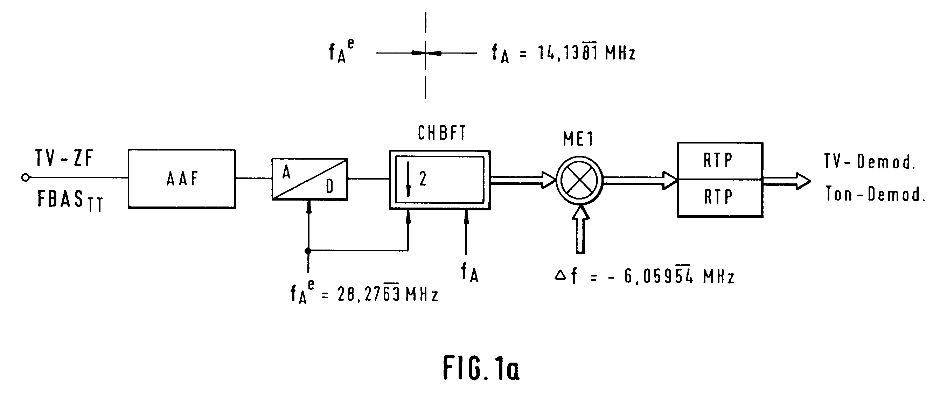

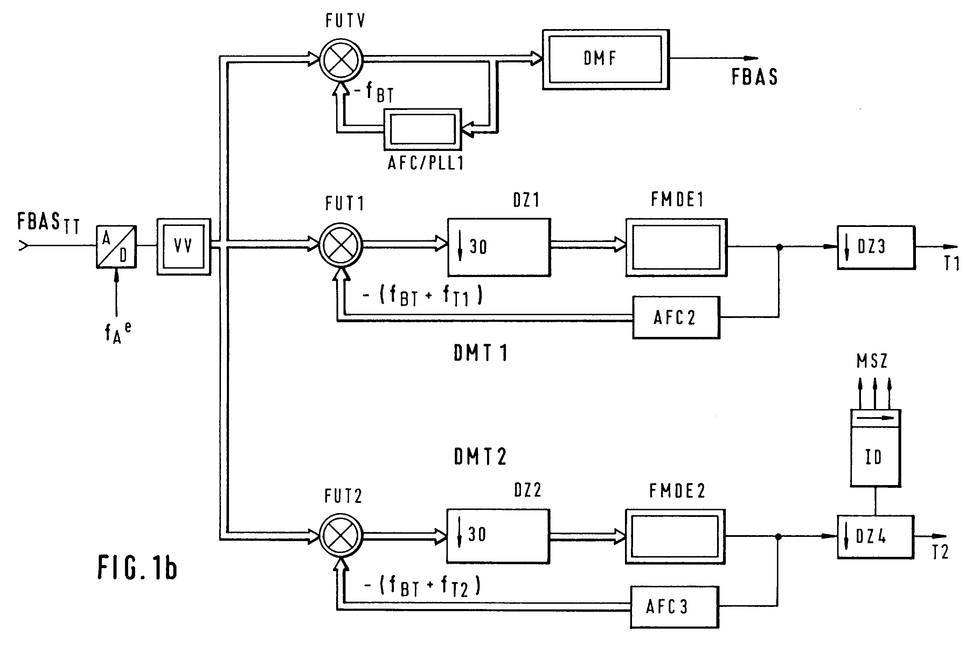

Das Blockschaltbild nach Figur 1 zeigt eine mögliche Ausführungsform der Signalvorverarbeitung für die sich anschließenden Bild- und Tondemodulationseinrichtungen, beispielsweise bestehend aus dem Demodulator DMF für die Bildanteile mit vorgeschaltetem Mischer FUTV und den Demodulatoren DMT1 und DMT2 für die getrennte Verarbeitung der Tonanteile mit entsprechend vorgeschalteten Mischern FUT1 und FUT2. Das Eingangssignal für die Signalvorverarbeitung gemäß Figur 1 ist ein analoges reellwertiges Fernsehsignal $FBAS_{TT}$, welches in Zwischenfrequenzlage vorliegt - mit einem Bildträger vorzugsweise bei 38,9 MHz (CCIR-Norm). Mittels einer Abtasteinheit - A/D-Wandler - wird das $FBAS_{TT}$-Signal geschlossen abgetastet. Die Abtastfrequenz beträgt vorzugsweise $f_A{}^e = 28,27\overline{63}$ MHz.

Figur 4 zeigt das Fernsehsignal vor und nach der Abtastung (a) und nach Filterung und Dezimation (b). Das abgetastete reellwertige Fernsehsignal wird mittels einer digitalen Vorverarbeitungsstufe VV in ein komplexwertiges Digitalsignal überführt und spektral so verschoben, daß die Mittenfrequenz des komplexwertigen Digitalsignals bei der Frequenz 0 erscheint (Figur 1a). Zur Verdeutlichung, wo das Digitalsignal in komplexwertiger Form vorliegt, sind in den Figuren die entsprechenden Signalpfade und Baugruppen mit Doppelstrichen gekennzeichnet.

Bei der Abtastung mit $f_A{}^e = 28,27\overline{63}$ MHz ist vorausgesetzt, daß durch ein vorgeschaltetes analoges ZF-Filter eine ausreichende Bandbegrenzung erreicht wird. Falls kein solches ZF-Filter vorgesehen ist, sollte ein Antialiasing-Filter AAF vorgeschaltet werden, welches das Fernsehsignal mit der Nutzbandbreite B so begrenzt, daß sich durch die Abtastung mit einer Abtastrate $f_A{}^e > 2B$ keine spektralen Überlappungen oder Überfaltungen mit dem Nutzspektrum oder dessen Spiegelfrequenzen ergeben. Nach der Analog-Digital-Umsetzung A/D ist das Fernsehsignal mit $f_A{}^e$ überabgetastet, um dann anschließend mit einem komplexen Digitalfilter CHBFT gefiltert und dezimiert zu werden durch Abtastung mit

$$f_A = f_A{}^e/2 = 14,13\overline{81} \text{ MHz.}$$

Das komplexe Digitalfilter CHBFT extrahiert das Signalspektrum in Regellage, wie es für die nachfolgende TV-Demodulation benötigt wird. Natürlich kann bedarfsweise auch eine Weiterverarbeitung in Kehrlage erfolgen.

Das komplexe Digitalfilter CHBFT ist vorzugsweise als L-Band Filter (komplexes Nyquistfilter) ausgebildet, wobei L ein ganzzahliger Dezimationsfaktor ist. Bei einem komplexen Nyquistfilter ist für den aufwandsgünstigsten Fall der mittlere Koeffizient reell 1/L oder rein imaginär j/L. Mit einem Dezimationsfaktor L=2, der die vorherige Überabtastung durch die Abtasteinheit A/D um den Faktor 2 wieder rückgängig macht, wird der mittlere Koeffizient 1/2 bzw. j/2 (Halbbandfilter).

Die Baugruppen der Vorverarbeitungsstufe nach Figur 1 stimmen teilweise mit der Realisierung gemäß EP-A-0 651 526 überein. Das Prinzip des komplexen Halbbandfilters CHBFT an sich ist in der DE-PS 36 21 737 beschrieben. Der Betrag der Übertragungsfunktion des komplexen Halbbandfilters $IH_{CHBFT}I$ ist in Figur 4 dargestellt, mitsamt den Abtastfrequenzen $f_A^e$ bzw. $f_A$ und den Bandgrenzen. Die jeweilige Lage des Bildträgers ist mit BT gekennzeichnet und die Lage der Tonträger mit TT. Für die Frequenzverschiebung des komplexwertigen Digitalsignals derart, daß die Mittenfrequenz des komplexwertigen Digitalsignals bei der Frequenz 0 bzw. $f_{BT} = -2,545$ MHz erscheint, ist wie bei der Realisierung gemäß P 43 37 134 am Ausgang des komplexen Halbbandfilters CHBFT eine komplexe Mischeinrichtung ME1 vorgesehen, der eine Mischfrequenz von $f_o = 6,059\overline{54}$ MHz zugeführt wird. Das Ausgangssignal der komplexen Mischeinrichtung ME1 wird einem Paar identischer Tiefpässe RTP mit reellen Koeffizienten zugeführt, die rekursiv oder nichtrekursiv realisiert werden können. Ein Tiefpaß ist für den Realteil, der andere für den Imaginärteil des zu verarbeitenden komplexen Signals vorgesehen. Ein solches Filterpaar mit reellen Koeffizienten - es ist also keine Überkopplung von Realteil und Imaginärteil bzw. umgekehrt vorhanden - ist deshalb für die Filterung des komplexen Signals einsetzbar, da die Mittenfrequenz des Spektrums des komplexen (Zeit-)Signals bei f = 0 liegt. Diese Tiefpässe können als linearphasige FIR Filter aufwandsarm realisiert werden. Mit einem Filtergrad von N = 105 für das RTP Filterpaar kann eine Nachbarkanalselektion von $a_s$ = 75 dB erreicht werden.

Das Ausgangssignal der Vorverarbeitungsstufe VV wird in einer ersten Realisierung in drei Zweigen - bei zwei vorgesehenen Tonträgern - weiterverarbeitet und zwar in einem ersten Zweig für die Bilddemodulation und in zwei weiteren Zweigen für die beiden Tonsignale T1 und T2 (Figur 1b). Bei nur einem zu verarbeitenden Tonträger entfällt natürlich der dritte Zweig. Im ersten Zweig ist eine erste komplexe Mischeinrichtung FUTV vorgesehen, deren Mischfrequenz so gewählt ist, daß der Bildträger $f_{BT}$ nach der Mischung bei der Frequenz 0 erscheint. An die komplexe Mischeinrichtung schließt sich ein komplexer digitaler Demodulator DMF für den Bildanteil des Fernsehsignals an, mittels dessen das FBAS Signal, abgetastet im Beispiel mit 14,138$\overline{18}$ MHz, extrahiert wird. Die komplexe Mischeinrichtung FUTV ist mit einer Frequenz- und/oder Phasenregelschleife AFC/PLL1 ausgestattet, die es ermöglicht, daß der Bildträger BT exakt bei der Frequenz 0 zu liegen kommt und die korrekte Phase aufweist (Einrastzustand).

Im zweiten Zweig ist ein digitaler Demodulator DMT1 für die Verarbeitung des ersten Tonträgers T1 vorgesehen, welcher gespeist von der Vorverarbeitungsstufe VV zuerst eine komplexe Mischeinrichtung FUT1 für die Verarbeitung des Tonträgers T1 aufweist. Die komplexe Trägerschwingung für die Mischeinrichtung FUT1 wird über die Frequenz und/oder Phasenregelschleife AFC2 abgeleitet.

Im dritten Zweig, der wie der zweite Zweig aufgebaut ist, jedoch zur Verarbeitung des Tonträgers T2 dient, befindet sich der digitale Demodulator DMT2 mit der eingangsseitigen Mischeinrichtung FUT2. Die komplexe Trägerschwingung für diese Mischeinrichtung FUT2 wird über die Frequenz und/oder Phasenregelschleife AFC3 abgeleitet.

Die Mischeinrichtungen FUT1 und FUT2 bewirken durch die Wahl der Mischfrequenzen $-(f_{BT} + f_{T1})$ und $-(f_{BT} + f_{T2})$, daß die Mittenfrequenz der Tonträger nach der Mischung jeweils bei f = 0 liegen. Da ein FM-Spektrum ein Zweiseitenbandsignal darstellt, weisen die Dezimationsfiltereinrichtungen DZ1 und DZ2, die den Mischeinrichtungen FUT1 und FUT2 nachgeschaltet sind, reelle Koeffizienten auf.

Die Dezimationsfiltereinrichtungen DZ1 und DZ2 sind gleich aufgebaut und nehmen eine Abtastratenverminderung mit Q = 1/M vor, wobei M in der Regel eine natürliche Zahl, z.B. 30 ist, d.h. die Abtastrate wird von 14,38$\overline{18}$ MHz auf 471,$\overline{27}$ kHz vermindert. Solche Dezimationsfiltereinrichtungen sind beispielsweise in Multirate Digital Signal Processing von R.E. Crochiere und L.R. Rabiner, Prentice-Hall Inc. Englewood Cliffs, NJ. USA, beschrieben. Es kommen rekursive oder nichtrekursive FIR-Filter, die effizient als Polyphasenfilter realisierbar sind, in Frage. Vorzugsweise erfolgt die Dezimation in drei Stufen mit den Dezimationsfaktoren 5, 3 und 2. Die Ausgangssignale der Dezimationsfiltereinrichtungen DZ1 und DZ2 werden jeweils zu einem komplexen Ton-FM-Demodulator FMDE1 bzw. FMDE2 für jeweils eines der Tonsignale T1, T2 weitergeleitet. Solche komplexen Ton-FM-Demodulatoren mit komplexwertigen Eingangs- und reellwertigen Ausgangssignalen sind an sich bekannt (Signal Processing 9, 1985, North Holland, Seiten 263-276 "Equalization Problems in a Digital FM Receiver") und bedürfen daher keiner näheren Erläuterung. Die Frequenzregelschleifen AFC2 und AFC3 können vom Grade 1 sein. Alternativ kann auch eine kombinierte Frequenz- und Phasenregelschleife vorgesehen sein. Die Frequenzregelschleifen AFC2 und AFC3 lassen sich mit einem Frequenzfehlerdetektor realisieren, z. B. gemäß IEEE Transactions on Communications, Vol. 37, No. 2, 1989, Seiten 159-163. Die Frequenzregelschleifen AFC2 und AFC3 verarbeiten die Ausgangssignale der beiden FM-Demodulatoren FMDE1 bzw. FMDE2 zu zwei komplexen Trägerschwingungen der Frequenz $-(f_{BT} + f_{T1})$ bzw. $-(f_{BT} + f_{T2})$. Der Bildträger $f_{BT}$, den die Regelschleifen AFC2 und AFC3 als Bezugsfrequenz benötigen, kann vom Ausgangssignal der Mischeinrichtung FUTV oder von einem Signal in dessen Regelschleife AFC/PLL1 abgeleitet sein, oder wird in den Regelschleifen AFC2 und AFC3 als nomineller Anfangswert fest eingestellt. Letzteres gilt auch für die Nominalwerte der Tonträgerfrequenzen $f_{T1}$ und $f_{T2}$. Zur Gewinnung digitaler Tonsignale mit standardisierten Abtastfrequenzen, z.B. 32 kHz, ist jeweils nur noch eine Dezimation um den Dezimationsfaktor 22/81 erforderlich. Dafür sind die Dezimationsfiltereinrichtungen DZ3 und DZ4 vorgesehen, die vorzugsweise zuerst um den Faktor 2 dezimieren und anschließend um den Faktor 11/81.

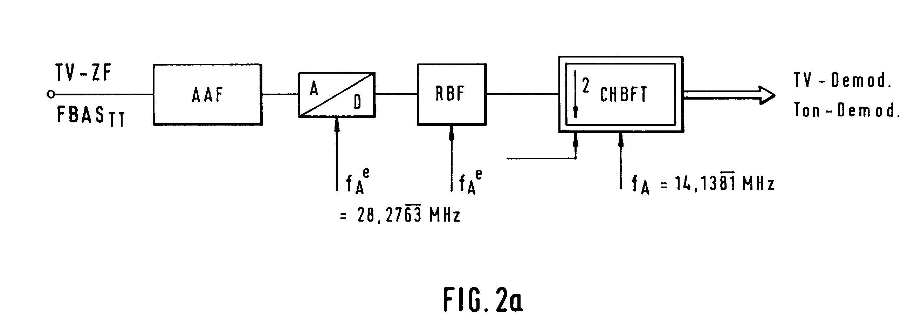

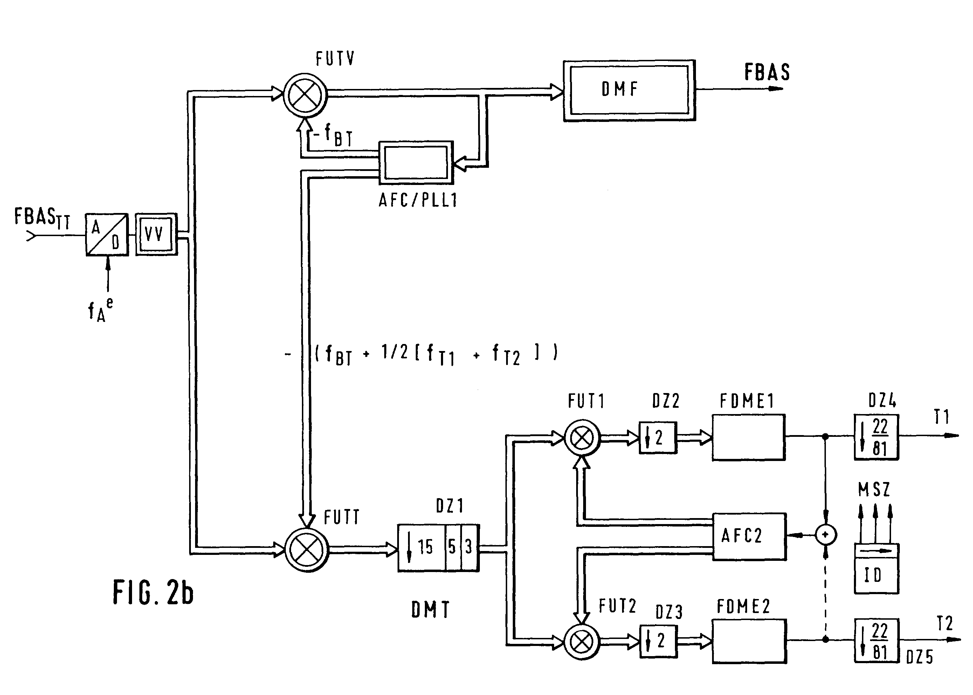

Eine Alternative sowohl für die Vorverarbeitungsstufe VV (Figur 2a) als auch für die nachfolgende Bild- und Tondemodulation (Figur 2b) zeigt Figur 2. Selbstverständlich kann die Ausgestaltung der Vorverarbeitungsstufe nach Figur 1a mit der Ausgestaltung der Bild- und Tondemodulation gemäß Figur 2b kombiniert werden. Im Gegensatz zu Figur 1a befindet sich am Ausgang des A/D-Umsetzers ein Digitalfilter RBF in Form eines allgemeinen (also nichtrekursiv oder rekursiv) FIR oder IIR Bandpaßfilters, welches mit der Abtastrate $f_A$ arbeitet und zur Bandbegrenzung des abgetasteten reellwertigen Fernsehsignals dient. Es weist reelle Koeffizienten $N_{RBF}$ auf, so daß sich die Multiplikationsrate $M_{RBF} = N_{RBF} \cdot f_A$ ergibt. Das nachgeschaltete Digitalfilter CHBFT arbeitet mit derselben Abtastrate $f_A$. Es ist als komplexes Halbbandfilter ausgebildet zur Überführung des überabgetasteten reellwertigen Fernsehsignals in ein komplexwertiges Ausgangssignal. Das Filter CHBFT ist so ausgebildet, daß es eine Abtastratenwandlung um den Faktor 1/2 durchführt, d.h. die Überabtastung um den Faktor 2 des A/D-Umsetzers wird wieder rückgängig gemacht. Einige Koeffizienten dieses komplexen Halbbandfilters CHBFT sind identisch 0. Für das sehr steilflankig auszulegende Digitalfilter RBF ergibt sich beispielsweise ein Filtergrad von N = 127 und für das Filter CHBFT ein Filtergrad von N = 27. Das Filter CHBFT ist so ausgebildet, daß es eine Abtastratenwandlung um den Faktor 1/2 durchführt, d.h. die Überabtastung um den Faktor 2 des A/D-Umsetzers wird wieder rückgängig gemacht. Die CHBFT Filter von Figur 1a und Figur 2a sind also gleich.

Das Ausgangssignal des Filters CHBFT wird nun im Unterschied zur Realisierung gemäß Figur 1b bezüglich der zwei oder mehreren Tonanteile (im Ausführungsbeispiel sind zwei Tonträger TT angenommen) gemeinsam weiterverarbeitet. Der Zweig für die Bilddemodulation ist wie in Figur 1b ausgestaltet mit dem Unterschied, daß die Frequenz- und/oder Phasenregelschleife einen zweiten Ausgang aufweist zur Bereitstellung der Mischfrequenz der komplexen Mischeinrichtung FUTT am Eingang des Demodulators DMT zur gemeinsamen Verarbeitung der Tonanteile. Die komplexe Trägerschwingung für die Mischeinrichtung FUTT wird somit von der Trägerschwingung der Mischeinrichtung FUTV abgeleitet. Im in Figur 2b dargestellten Ausführungsbeispiel ist die Frequenz- und/oder Phasenregelschleife AFC/PLL1 so ausgestaltet, daß an ihrem ersten Ausgang die Bildträgerfrequenz $f_{BT}$ für die Mischeinrichtung FUTV erscheint und an ihrem zweiten Ausgang die um den arithmetischen Mittelwert der beiden Tonträgerfrequenzen $f_{T1}$ und $f_{T2}$ versetzte Bildträgerfrequenz $f_{BT}$ + 1/2 $[f_{T1} + f_{T2}]$. Alternativ lassen sich wie zuvor getrennte Regelschleifen AFC2 und AFC3 verwenden, deren nomineller Anfangswert fest eingestellt ist.

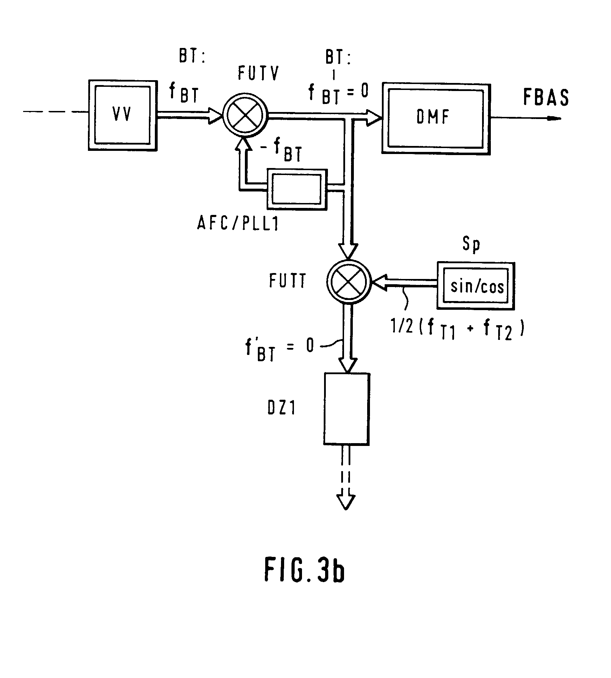

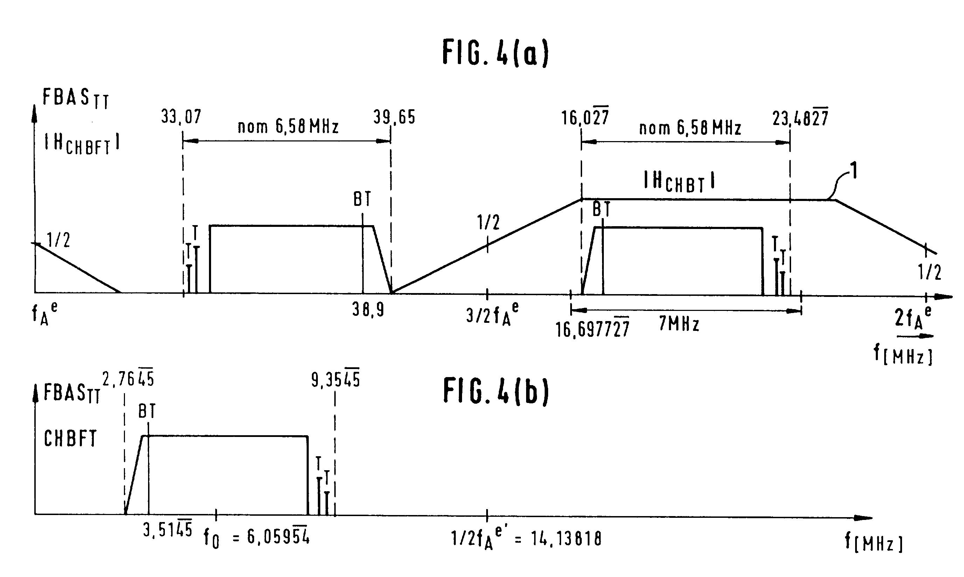

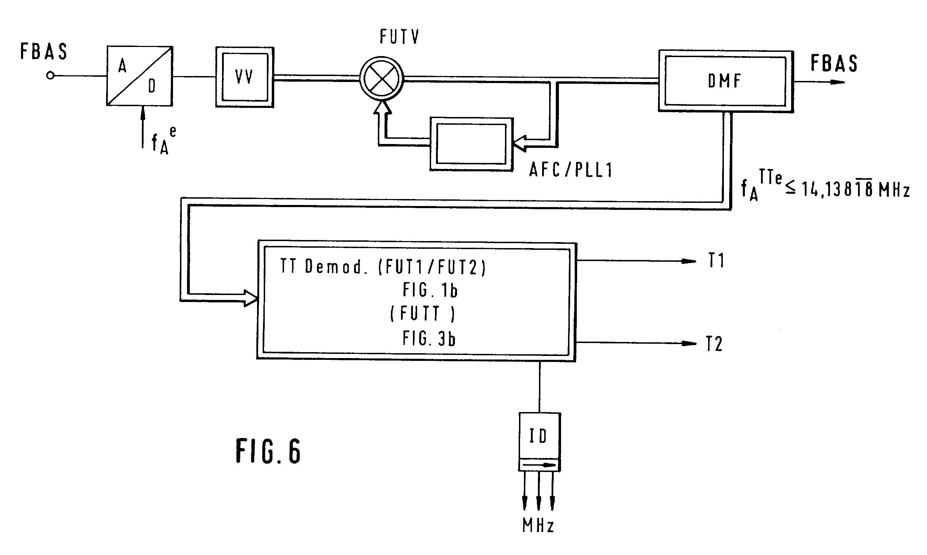

In einer weiteren Alternativlösung, dargestellt in Figur 3b, wird die komplexe Trägerschwingung $f_{BT}$ + 1/2 $[f_{T1} + f_{T2}]$ für die Mischeinrichtung FUTT nicht über die Frequenz- und/oder Phasenregelschleife AFC/PLL1 abgeleitet, sondern es wird das Ausgangssignal der Mischeinrichtung FUTV unter Zusatz des komplexen Trägers mit der Frequenz des arithmetischen Mittelwertes 1/2 $(f_{T1} + f_{T2})$ der nominellen Tonträgerfrequenzen $f_{T1}$ und $f_{T2}$ gemischt, so daß in dem Ausgangssignal von FUTT der eine Tonträger bei -1/2 $(f_{T1} + f_{T2})$ und der anderen Tonträger bei 1/2 $(f_{T1} + f_{T2})$ liegt. Als Eingangssignal für FUTT kann unmittelbar das komplexe mittels FUTV abgemischte FBAS$_{TT}$-Signal verwendet werden (neue Lage des Bildträgers $f'_{BT}$=0), oder der Real- oder Imaginärteil dieses Signals. Im letztgenannten Fall läßt sich entweder mit Hilfe eines der beschriebenen CHBF-Filter (L-Band) mit nachfolgender Frequenzumsetzung oder mit der Weaver-Methode wiederum ein komplexes TT-Signal ableiten in der oben angegebenen Frequenzlage.

Diese komplexe Trägerschwingung (Mischerfrequenz: -1/2($f_{T1} + f_{T2}$)) kann durch Umwandlung einer reellen Trägerschwingung - z.B. mittels CHBF-Filter oder der Weaver-Methode - in den komplexen Bereich erzeugt werden. Im einfachsten Fall dient dazu eine Speichereinrichtung Sp mit einer sin/cos-Tabelle. Die Speichereinrichtung kann entweder als ROM oder RAM Standard-Chip ausgestaltet sein, wo die Abtastwerte der sin/cos-Werte entweder fest oder veränderbar abgespeichert werden.

Der Ausgang der Mischeinrichtung FUTT (Figur 2b oder Figur 3b) führt zu einer Dezimationsfiltereinrichtung DZ1, welche eine Abtastratenwandlung um Q = 1/M, wobei M eine natürliche Zahl ist, beispielsweise um 15, d.h. von 14,13$\overline{81}$ MHz auf 942,$\overline{54}$ kHz durchführt. Diese Dezimationsfiltereinrichtung kann analog zur Dezimationsfiltereinrichtung gemäß DE PS 36 21 737 aufgebaut sein. Solche Dezimationsfiltereinrichtungen sind wie zuvor erwähnt allgemein auch in Multirate Digital Signal Processing von R.E. Crochiere und L.R. Rabiner, Prentice-Hall Inc. Englewood Cliffs, NJ. USA, beschrieben. Es kommen rekursive oder nichtrekursive FIR-Filter, die effizient als Polyphasenfilter realisierbar sind, in Frage. Vorzugsweise erfolgt die Dezimation in zwei Stufen mit den Dezimationsfaktoren 5 und 3. Das Ausgangssignal der Dezimationsfiltereinrichtung DZ1 wird in parallelen Zweigen jeweils getrennt für die beiden Tonsignale T1 und T2 einer dritten und vierten komplexen Mischeinrichtung FUT1 bzw. FUT2 zugeführt. Die Trägerschwingungen für die beiden Mischeinrichtungen FUT1 und FUT2 lassen sich, wie noch erläutert wird, gemeinsam aufbereiten. Den beiden Mischeinrichtungen FUT1 und FUT2 ist jeweils eine Dezimationsfiltereinrichtung DZ2 bzw. DZ3 zur Abtastratenwandlung um den Faktor 2, d.h. auf 471,$\overline{27}$ kHz nachgeschaltet. Daran schließt sich jeweils ein komplexer Ton-FM-Demodulator FMDE1 bzw. FMDE2 an für jeweils eines der Tonsignale T1, T2. Solche komplexen Ton-FM-Demodulatoren mit komplexwertigen Eingangs- und reellwertigen Ausgangssignalen sind wie zuvor geschildert an sich bekannt (Signal Processing 9, 1985, North Holland, Seiten 263-276 "Equalization Problems in a Digital FM Receiver") und bedürfen daher keiner näheren Erläuterung. Zur frequenzrichtigen Ableitung der Mischfrequenzen für die dritte und vierte Mischeinrichtung FUT1 bzw. FUT2 ist mindestens eine Frequenzregelschleife AFC2 mindestens erster Ordnung vorgesehen. Alternativ kann auch eine kombinierte Frequenz- und Phasenregelschleife vorgesehen sein. Die Frequenzregelschleife AFC2 kann mit einem Frequenzfehlerdetektor realisiert werden gemäß IEEE Transactions on Communications, Vol. 37, No. 2, 1989, Seiten 159-163. Die Frequenzregelschleife AFC2 verarbeitet das Ausgangssignal mindestens eines der beiden FM-Demodulatoren FMDE1 bzw. FMDE2 zu zwei komplexen Trägerschwingungen der Frequenz + 1/2 ($f_{T2}$ - $f_{T1}$) bzw. - 1/2 ($f_{T2}$ - $f_{T1}$), die sich jeweils aus den Differenzen der beiden Tonträgerfrequenzen ergeben, aber hinsichtlich ihrer Vorzeichen unterschiedlich sind. Zur Erzeugung komplexer Trägerschwingungen aus dem/den reellwertigen Ausgangssignal/en sind in der Frequenzregelschleife wiederum sin/cos-Tabellen verwendet. Im Gegensatz zu einer getrennten Tonverarbeitung entsprechend der Ausgestaltung nach Figur 1 ist der Aufwand geringer. Zur Dezimation um den Faktor 15 ist nur ein Dezimationsfilter notwendig. Ebenso ist nur eine AFC-Schleife für die Demodulation der beiden Tonträger T1 und T2 notwendig, die zudem noch mit einer sin/cos-Tabelle auskommt. (Frequenz und damit Phase unterscheiden sich nur durch das Vorzeichen). Die AFC-Schleife weist darüber hinaus eine geringere Schleifenverzögerung auf. Zur Gewinnung digitaler Tonsignale mit standardisierten Abtastfrequenzen, z.B. 32 kHz, ist jeweils nur noch eine Dezimation um den Dezimationsfaktor 22/81 erforderlich. Dafür sind die Dezimationsfiltereinrichtungen DZ4 und DZ5 vorgesehen, die vorzugsweise zuerst um den Faktor 2 dezimieren und anschließend um den Faktor 11/81.

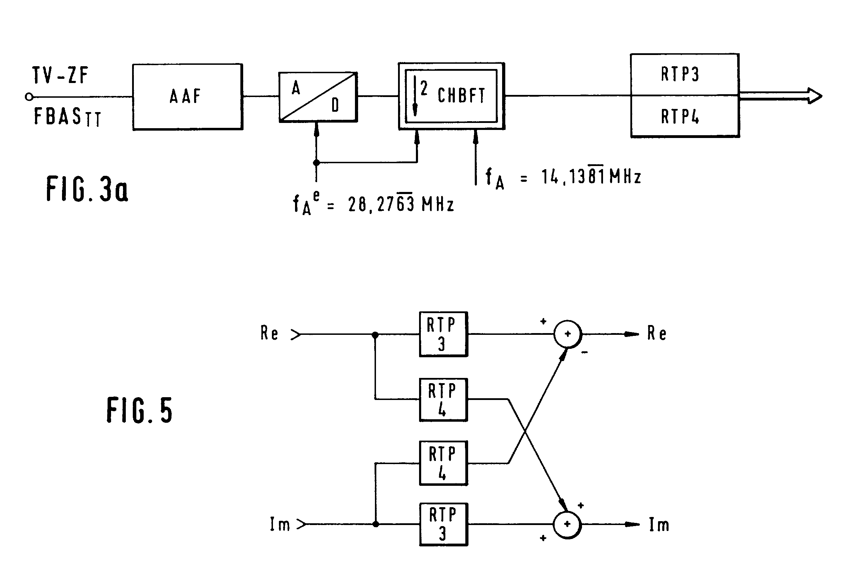

Die Vorverarbeitungsstufe VV gemäß Figur 3a weist wie das Ausführungsbeispiel in Figur la hinter dem A/D-Umsetzer ein komplexes Digitalfilter CHBFT auf, welches vorzugsweise ebenfalls als L-Band Filter mit einem Dezimationsfaktor von 2 ausgebildet ist. Im Gegensatz zu Figur 1 entfällt die Mischeinrichtung ME1 und das Digitalfilterpaar RTP3/RTP4 zur Bandbegrenzung des komplexwertigen Digitalsignals weist nun komplexe Koeffizienten auf. Ein Blockschaltbild für dieses Filterpaar ist in Figur 5 dargestellt. Es besteht aus vier Teilfiltern von denen jeweils zwei identisch sind. Wie Figur 5 zeigt, sind jeweils zwei gleich aufgebaute Teilfilter für den Real- und Imaginärteil der komplexen Koeffizienten (RTP3, RTP4) ausgangsseitig miteinander verknüpft und zwar so, daß ein Filterpaar den Realteil bzw. und das andere Filterpaar den Imaginärteil des Ausgangssignals der Vorverarbeitungsstufe VV liefert, wobei das jeweilige Filterpaar jeweils mit dem komplexwertigen Digitalsignal gespeist wird. .

Selbstverständlich kann jede der in den Figuren 1 bis 3 dargestellte Variante der Vorverarbeitungsstufe mit jeder Variante für die Weiterverarbeitung - getrennte oder gemeinsame Tonsignalverarbeitung mit unterschiedlicher Aufbereitung der Mischfrequenz der/des Mischer/s FUT1, FUT2 bzw. FUTT kombiniert werden.

Eine ebenfalls mögliche weitere Variante für die Demodulation der Bild- und Tonteile zeigt Figur 6. Der digitale Demodulator DMF für die Verarbeitung der Bildanteile weist einen zusätzlichen Ausgang auf zur Entnahme der Tonanteile und zur Weiterleitung an den/die Demodulator/en DMT bzw. DMT1 und DMT2. Die Tonanteile können aus dem Demodulator DMF reell oder komplex entnommen werden. Im ersteren Fall sind sie nochmals zu wandeln, bei ≈ 14 MHz oder schon dezimiert. Als Tondemodulatoren sind die Versionen gemäß Figur 1b oder Figur 3b besonders geeignet, wobei ein Teil oder die gesamte Dezimation um den Faktor 15 im Zweig der Tonsignalverarbeitung entfallen kann (je nach Übergabeabtastfrequenz des Demodulators DMF für die Bildanteile).

Im Gegensatz zu den zuvor vorgestellten Ausführungsbeispielen wird der Demodulator für die Bildanteile aufwendiger, da die Tonträger TT nicht nur unterdrückt, sondern ungestört übergeben werden müssen. Jedoch bietet diese Version analog zum Intercarrier-Verfahren ein Maximum an gemeinsamer Signalverarbeitung.

Zur Extraktion gegebenenfalls vorgesehener Ton-Identifikationssignale MSZ (Mono, Stereo, Zweiton bzw. Vielfachton) ist eine Einrichtung ID vorgesehen, die vorzugsweise an eine der weiteren oder zusätzlichen Dezimationsfiltereinrichtungen DZ2, DZ3, DZ4, DZ5 angeschlossen ist.

Für die Frequenz- und/oder Phasenregelschleife AFC/PLL1 kann prinzipiell die Lösung gemäß International Conference on Digital Satellite Communications, Kopenhagen, Mai 1992, Seiten B247 - B254 verwendet werden.

Als Demodulator DMF für den Bildanteil eignet sich eine bekannte Lösung, z.B. gemäß DE 33 05 918 C2.

Die Erfindung erlaubt es, alle Filter als FIR-Filter mit linearer Phase auszubilden. Damit kann ein universeller Filterbaustein für alle unterschiedlichen Filterfunktionen eingesetzt werden EP-A-0 612 147, veröffentlicht am 24.8.94.

**Patentansprüche**

1.  Einrichtung zum Verarbeiten eines modulierten reellwertigen analogen Fernsehsignals in Zwischenfrequenzlage bestehend aus:

    -   einer Abtasteinheit (A/D) zur geschlossenen Abtastung des Fernsehsignals in Zwischenfrequenzlage mit einem Überabtastfaktor von mindestens 2, bezogen auf die Nutzbandbreite des Fernsehsignals in der Zwischenfrequenzlage,
- einem Digitalfilter (CHBFT) zur Überführung des überabgetasteten Signals in ein komplexwertiges Digitalsignal,
- einer Mischeinrichtung (ME1) zur Frequenzverschiebung des komplexwertigen Digitalsignals derart, daß die Mittenfrequenz des komplexwertigen Digitalsignals bei der Frequenz 0 erscheint,
- einem Digitalfilter (RTP1/RTP2) zur Bandbegrenzung des komplexwertigen frequenzverschobenen Digitalsignals zu einem komplexwertigen Ausgangssignal, wobei dieses Digitalfilter (RTP1/RTP2) jeweils reelle Koeffizienten für die getrennte Behandlung des Realteils und des Imaginärteils des komplexwertigen frequenzverschobenen Digitalsignals aufweist,
- digitalen Demodulatoren (DMF, DMT, DMT1, DMT2) zur gemeinsamen oder getrennten Verarbeitung der Bild- und Tonanteile des komplexwertigen Ausgangssignals nach vorheriger geeigneter Mischung (FUTV, FUT1, FUT2, FUTT).

2. Einrichtung zum Verarbeiten eines modulierten reellwertigen analogen Fernsehsignals in Zwischenfrequenzlage bestehend aus:

- einer Abtasteinheit (A/D) zur geschlossenen Abtastung des Fernsehsignals in Zwischenfrequenzlage mit einem Überabtastfaktor von mindestens 2, bezogen auf die Nutzbandbreite des Fernsehsignals in der Zwischenfrequenzlage,
- einem Digitalfilter (RBF) mit reellen Koeffizienten zur Bandbegrenzung des reellwertigen Fernsehsignals,
- einem Digitalfilter (CHBFT) zur Überführung des überabgetasteten reellwertigen Fernsehsignals in ein komplexwertiges Ausgangssignal,
- digitalen Demodulatoren (DMF, DMT, DMT1, DMT2) zur gemeinsamen oder getrennten Verarbeitung der Bild- und Tonanteile des komplexwertigen Ausgangssignals nach vorheriger geeigneter Mischung (FUTV, FUT1, FUT2, FUTT).

3. Einrichtung zum Verarbeiten eines modulierten reellwertigen analogen Fernsehsignals in Zwischenfrequenzlage bestehend aus:

- einer Abtasteinheit (A/D) zur geschlossenen Abtastung des Fernsehsignals in Zwischenfrequenzlage mit einem Überabtastfaktor von mindestens 2, bezogen auf die Nutzbandbreite des Fernsehsignals in der Zwischenfrequenzlage,
- einem Digitalfilter (CHBFT) zur Überführung des überabgetasteten reellwertigen Signals in ein komplexwertiges Digitalsignal,
- einem Digitalfilter (RTP3/RTP4) zur Bandbegrenzung des komplexwertigen Digitalsignals zu einem komplexwertigen Ausgangssignal, wobei dieses Digitalfilter komplexe Koeffizienten aufweist.
- digitalen Demodulatoren (DMF, DMT, DMT1, DMT2) zur gemeinsamen oder getrennten Verarbeitung der Bild- und Tonanteile des komplexwertigen Ausgangssignals nach vorheriger geeigneter Mischung (FUTV, FUT1, FUT2, FUTT).

4. Einrichtung nach einem der Ansprüche 1 bis 3, dadurch gekennzeichnet, daß das Digitalfilter (CHBFT) zur Überführung des überabgetasteten reellwertigen Fernsehsignals in ein komplexwertiges Digitalsignal eine Dezimationseinrichtung (DE1) aufweist mit einem Dezimationsfaktor, der dem Überabtastfaktor der Abtasteinheit (A/D) entspricht.

5. Einrichtung nach einem der Ansprüche 1 bis 4, dadurch gekennzeichnet, daß das Digitalfilter (CHBFT) zur Überführung des überabgetasteten reellwertigen Fernsehsignals in ein komplexwertiges Digitalsignal aus einem komplexen L-Band Filter besteht, wobei L einen ganzzahligen Dezimationsfaktor bezeichnet.

6. Einrichtung nach einem der Ansprüche 1, 4 oder 5, dadurch gekennzeichnet, daß das Digitalfilter (RTP1/RTP2) zur Bandbegrenzung des komplexwertigen Digitalsignals aus einem Filterpaar mit identisch aufgebauten Teilfiltern für den Realteil und den Imaginärteil des komplexwertigen Digitalsignals besteht.

7. Einrichtung nach einem der Ansprüche 3, 4 oder 5, dadurch gekennzeichnet, daß das Digitalfilter (RTP3/RTP4) zur Bandbegrenzung des komplexwertigen Digitalsignals aus vier Teilfiltern für den Realteil und Imaginärteil der komplexen Koeffizienten besteht, daß jeweils zwei Teilfilter identisch sind und daß die Teilfilter ausgangsseitig so miteinander verknüpft sind, daß ein Filterpaar den Realteil und das andere Filterpaar den Imaginärteil des Ausgangssignals der Vorverarbeitungsstufe (VV) liefert, wobei das jeweilige Filterpaar jeweils mit dem komplexwertigen Digitalsignal beaufschlagbar ist.

8. Einrichtung nach einem der Ansprüche 1 bis 7, dadurch gekennzeichnet, daß die Abtastfrequenz $f_A^e$ der Abtasteinheit (A/D) etwa 4/5 der Mittenfrequenz des Fernsehsignals in Zwischenfrequenzlage, insbesondere $f_A^e = = 28,2763$ MHz beträgt.

9. Einrichtung nach einem der Ansprüche 1 bis 8, dadurch gekennzeichnet, daß die Digitalfilter (CHBF, RBF, RTP1/RTP2, RTP3/RTP4) bzw. deren Teilfilter aus rekursiven oder nichtrekursiven, insbesondere linearphasigen Transversalfiltern mit symmetrischen Koeffizienten bestehen.

10. Einrichtung nach einem der Ansprüche 1 bis 3, dadurch gekennzeichnet, daß dem digitalen Demodulator (DMF) für die Verarbeitung der Bildanteile des komplexwertigen Digitalsignals eine komplexe Mischeinrichtung (FUTV) vorgeschaltet ist, wobei die Mischfrequenz so gewählt ist, daß der Bildträger ($f_{BT}$) nach der Mischung bei der Frequenz 0 erscheint.

11. Einrichtung nach Anspruch 10, dadurch gekennzeichnet, daß Demodulatoren (DMT1, DMT2) für die getrennte Verarbeitung der Tonanteile des komplexwertigen Digitalsignals jeweils eine komplexe Mischeinrichtung (FUT1, FUT2) vorgeschaltet ist, wobei die Mischfrequenzen so gewählt sind, daß die um die Bildträgerfrequenz ($f_{BT}$) versetzten Tonträgerfrequenzen ($f_{BT}$/ + $f_{T1}$, $f_{BT}$ + $f_{T2}$) nach der Mischung jeweils bei der Frequenz 0 erscheinen.

12. Einrichtung nach Anspruch 10 dadurch gekennzeichnet, daß einem Demodulator (DMT) für die gemeinsame Verarbeitung der Tonanteile des komplexwertigen Digitalsignals eine komplexe Mischeinrichtung (FUTT) vorgeschaltet ist, wobei die Mischfrequenz so gewählt ist, daß am Signalausgang dieser Mischeinrichtung (FUTT) die um den arithmetischen Mittelwert der Tonträgerfrequenzen ($f_{T1}$, $f_{T2}$) versetzte ursprüngliche Bildträgerfrequenz ($f_{BT}$/ + 1/2 [$f_{T1}$ + $f_{T2}$]) bei der Frequenz 0 erscheint.

13. Einrichtung nach einem der Ansprüche 10 bis 12, dadurch gekennzeichnet, daß der digitale Demodulator (DMF) für die Verarbeitung der Bildanteile einen Ausgang zur Entnahme der Tonanteile und zur Weiterleitung an den/die Demodulator/en (DMT, DMT1, DMT2) für die Tonanteile aufweist.

**Claims**

1. Device for processing a modulated real analog television signal at intermediate frequency, comprising:

    - a sampling unit (A/D) for closed sampling of the television signal at intermediate frequency having an oversampling factor of at least 2, related to the useful bandwidth of the television signal at the intermediate frequency,
    - a digital filter (CHBFT) for converting the oversampled signal into a complex digital signal,
    - a mixing device (ME1) for frequency shifting the complex digital signal in such a manner that the mid-frequency of the complex digital signal appears at the frequency 0,
    - a digital filter (RTP1/RTP2) for band limiting the complex, frequency-shifted digital signal to form a complex output signal, this digital filter (RTP1/RTP2) in each case having real coefficients for the separate handling of the real part and of the imaginary part of the complex, frequency-shifted digital signal,
    - digital demodulators (DMF, DMT, DMT1, DMT2) for joint or separate processing of the video and audio elements of the complex output signal after previous, suitable mixing (FUTV, FUT1, FUT2, FUTT).

2. Device for processing a modulated real analog television signal at intermediate frequency, comprising:

    - a sampling unit (A/D) for closed sampling of the television signal at intermediate frequency having an oversampling factor of at least 2, related to the useful bandwidth of the television signal at the intermediate frequency,
    - a digital filter (RBF) having real coefficients for band limiting of the real television signal,
    - a digital filter (CHBFT) for converting the oversampled real signal into a complex output signal,
    - digital demodulators (DMF, DMT, DMT1, DMT2) for joint or separate processing of the video and audio elements of the complex output signal after previous, suitable mixing (FUTV, FUT1, FUT2, FUTT).

3. Device for processing a modulated real analog television signal at intermediate frequency, comprising:

    - a sampling unit (A/D) for closed sampling of the television signal at intermediate frequency having an oversampling factor of at least 2, related to the useful bandwidth of the television signal at the intermediate frequency,
    - a digital filter (CHBFT) for converting the oversampled real signal into a complex digital signal,
    - a digital filter (RTP3/RTP4) for band limiting the complex digital signal to form a complex output signal, this digital filter having complex coefficients,
    - digital demodulators (DMF, DMT, DMT1, DMT2) for joint or separate processing of the video and audio elements of the complex output signal after previous, suitable mixing (FUTV, FUT1, FUT2, FUTT).

4. Device according to one of Claims 1 to 3, characterized in that the digital filter (CHBFT) has a decimation device (DE1), with a decimation factor which corresponds to the oversampling factor of the sampling unit (A/D), for conversion of the oversampled real television signal into a complex digital signal.

5. Device according to one of Claims 1 to 4, characterized in that the digital filter (CHBFT) comprises a complex L-band filter for conversion of the oversampled real television signal into a complex digital signal, L designating an integer decimation factor.

6. Device according to one of Claims 1, 4 or 5, characterized in that the digital filter (RTP1/RTP2) for band limiting the complex digital signal comprises a pair of filters having identically designed filter elements for the real part and the imaginary part of the complex digital signal.

7. Device according to one of Claims 3, 4 or 5, characterized in that the digital filter (RTP3/RTP4) for band limiting the complex digital signal comprises four filter elements for the real part and the imaginary part of the complex coefficients, in that two filter elements are in each case identical, and in that the filter elements are linked to one another on the output side such that one pair of filters supplies the real part and the other pair of filters supplies the imaginary part of the output signal of the preprocessing stage (VV), it being possible in each case to apply the complex digital signal to the respective pair of filters.

8. Device according to one of Claims 1 to 7, characterized in that the sampling frequency $f_A{}^e$ of the sampling unit (A/D) is approximately 4/5 of the mid-frequency of the television signal at intermediate frequency, in particular $f_A{}^e$ = 28.2763 MHz.

9. Device according to one of Claims 1 to 8, characterized in that the digital filters (CHBF, RBF, RTP1/RTP2, RTP3/RTP4) and their filter elements comprise recursive or non-recursive, in particular linear-phase, transverse filters with symmetrical coefficients.

10. Device according to one of Claims 1 to 3, characterized in that a complex mixing device (FUTV) is connected upstream of the digital demodulator (DMF) for the processing of the video elements of the complex digital signal, the mixing frequency being selected such that the video sub-carrier ($f_{BT}$) appears at the frequency 0 after mixing.

11. Device according to Claim 10, characterized in that demodulators (DMT1, DMT2) for the separate processing of the audio elements of the complex digital signal in each case have a complex mixing device (FUT1, FUT2) connected upstream of them, the mixing frequencies being selected such that the audio sub-carrier frequencies ($f_{BT} + f_{T1} + f_{BT} + f_{T2}$), which are offset by the video sub-carrier frequency ($f_{BT}$), in each case appear at the frequency 0 after mixing.

12. Device according to Claim 10, characterized in that a demodulator (DMT) for the joint processing of the audio elements of the complex digital signal has a complex mixing device (FUTT) connected upstream of it, the mixing frequency being selected such that the original video sub-carrier frequency ($f_{BT} + 1/2 [f_{T1} + f_{T2}]$), which is offset by the arithmetic mean of the audio sub-carrier frequencies ($f_{T1}, f_{T2}$), appears at the frequency 0 at the signal output of this mixing device (FUTT).

13. Device according to one of Claims 10 to 12, characterized in that the digital demodulator (DMF) for processing the video elements has an output for extraction of the audio elements and for passing them on to the demodulator or demodulators (DMT, DMT1, DMT2) for the audio elements.

**Revendications**

1. Installation de traitement d'un signal de télévision analogique modulé, à valeurs réelles, en fréquence intermédiaire comprenant :

- une unité de détection (A/D) pour la détection bouclée du signal de télévision en fréquence intermédiaire avec un coefficient de surdétection égal à au moins 2, rapporté à la largeur de la bande utile du signal de télévision en fréquence intermédiaire,
- un filtre numérique (CHBFT) pour transformer le signal surdétecté en un signal numérique à valeurs complexes,
- un mélangeur (ME1) pour décaler la fréquence du signal numérique à valeurs complexes de façon que la fréquence centrale du signal numérique à valeurs complexes corresponde à la fréquence 0,
- un filtre numérique (RTP1/RTP2) pour limiter la bande du signal numérique à valeurs complexes décalé en fréquence, de manière à donner un signal de sortie à valeurs complexes, ce filtre numérique (RTP1/RTP2) ayant chaque fois les coefficients réels pour le traitement séparé de la partie réelle et de la partie imaginaire du signal numérique à valeurs complexes à décalage de fréquence, et
- des démodulateurs numériques (DMF, DMT, DMT1, DMT2) pour traiter en commun ou de manière séparée la composante image et la composante son du signal de sortie à valeurs complexes après un mélange préalable approprié (FUTV, FUT1, FUT2, FUTT).

2. Installation pour le traitement d'un signal de télévision analogique modulé, à valeurs réelles, en fréquence intermédiaire comprenant :

- une unité de détection (A/D) pour la détection bouclée du signal de télévision en fréquence intermédiaire avec un coefficient de surdétection égal au moins à 2, rapporté à la largeur de la bande utile du signal de télévision en fréquence intermédiaire,
- un filtre numérique (RBF) avec des coefficients réels pour limiter la bande du signal de télévision à valeurs réelles,
- un filtre numérique (CHBFT) pour transformer le signal de télévision à valeurs réelles à surdétection, en un signal de sortie à valeurs complexes,
- des démodulateurs numériques (DMF, DMT, DMT1, DMT2) pour traiter en commun ou séparément les composantes image et son du signal de sortie à valeurs complexes après un mélange préalable approprié (FUTV, FUT1, FUT2, FUTT).

3. Installation de traitement d'un signal de télévision analogique modulé, à valeurs réelles, en fréquence intermédiaire comprenant :

- une unité de détection (A/D) pour la détection bouclée du signal de télévision en fréquence intermédiaire avec un coefficient de surdétection égal au moins à 2, rapporté à la largeur de la bande utile du signal de télévision en fréquence intermédiaire,
- un filtre numérique (CHBFT) pour transformer le signal à valeurs réelles à surdétection, en un signal numérique à valeurs complexes,
- un filtre numérique (RTP3/RTP4) pour limiter la bande du signal numérique à valeurs complexes et donner un signal de sortie à valeurs complexes, le filtre numérique ayant des coefficients complexes,
- des démodulateurs numériques (DMF, DMT, DMT1, DMT2) pour traiter séparément ou en commun les composantes image et son du signal de sortie à valeurs complexes après le mélange préalable (FUTV, FUT1, FUT2, FUTT).

4. Installation selon l'une des revendications 1 à 3, caractérisée en ce que le filtre numérique (CHBFT) pour transformer le signal de télévision à valeurs réelles à surdétection, en un signal numérique à valeurs complexes, comprend une installation de décimation (DE1) avec un coefficient de décimation qui correspond au coefficient de surdétection de l'unité de détection (A/D).

5. Installation selon l'une des revendications 1 à 4, caractérisée en ce que le filtre numérique (CHBFT) pour transformer le signal de télévision à valeurs réelles à surdétection, en un signal numérique à valeurs complexes, comprend un filtre à bande L, complexe, L étant un coefficient de décimation constitué par un nombre entier.

6. Installation selon l'une des revendications 1, 4 ou 5, caractérisée en ce que le filtre numérique (RTP1/RTP2) limitant la bande du signal numérique à valeurs complexes, se compose d'une paire de filtres avec des filtres partiels de construction identique pour la partie réelle et pour la partie imaginaire du signal numérique à valeurs complexes.

7. Installation selon l'une des revendications 3, 4 ou 5, caractérisée en ce que le filtre numérique (RTP3/RTP4) limitant la bande du signal numérique à valeurs complexes, se compose de quatre filtres partiels pour la partie réelle et la partie imaginaire des coefficients complexes, et chaque fois deux filtres partiels sont identiques tandis que les filtres partiels sont reliés en sortie pour qu'une paire de filtres fournisse la partie réelle et l'autre paire de filtres la partie imaginaire du signal de sortie de l'étage de traitement préalable (VV), la paire de filtres respective recevant chaque fois le signal numérique à valeurs complexes.

8. Installation selon l'une des revendications 1 à 7, caractérisée en ce que la fréquence de détection $f_A{}^e$ de l'unité de détection (A/D) correspond sensiblement à 4/5 de la fréquence centrale du signal de télévision en fréquence intermédiaire, notamment la fréquence $f_A{}^e = 28,2763$ MHz.

9. Installation selon l'une des revendications 1 à 8, caractérisée en ce que les filtres numériques (CHBF, RBF, RTP1/RTP2, RTP3/RTP4) ou leurs filtres partiels, sont des filtres transversaux notamment à phase linéaire, non récurrents ou récurrents, et ayant des coefficients symétriques.

10. Installation selon l'une des revendications 1 à 3, caractérisée en ce que le démodulateur numérique (DMF) pour le traitement des composantes d'image du signal numérique à valeurs complexes est précédé d'un mélangeur complexe (FUTV), et la fréquence de mélange est choisie pour que la porteuse image ($f_{BT}$) après mélange apparaisse à la fréquence 0.

11. Installation selon la revendication 10, caractérisée en ce que des démodulateurs (DTM1, DTM2) pour le traitement séparé des parties son du signal numérique à valeurs complexes, sont précédés chaque fois par un mélangeur complexe (FUT1, FUT2), et les fréquences de mélange sont choisies pour que les fréquences de porteuses son ($f_{BT} + f_{T1}$, $f_{BT} + f_{T2}$), chaque fois décalées de la fréquence de porteuse image ($f_{BT}$), apparaissent, après mélange, chaque fois à la fréquence 0.

12. Installation selon la revendication 10, caractérisée en ce qu' un démodulateur (DMT) pour le traitement commun des composantes son du signal numérique à valeurs complexes, est précédé par un mélangeur complexe (FUTT), et la fréquence de mélange est choisie pour qu'à la sortie du mélangeur (FUTT) apparaisse la fréquence de porteuse image d'origine ($f_{BT} + 1/2\ [f_{T1} + f_{T2}]$), décalée de la moyenne arithmétique des fréquences de porteuses son ($f_{T1}$, $f_{T2}$), pour apparaître à la fréquence 0.

13. Installation selon l'une des revendications 10 à 12, caractérisée en ce que le démodulateur numérique (DMF) pour le traitement des composantes image comporte une sortie pour prendre les composantes son et les transmettre aux démodulateurs (DMT, DMT1, DMT2) pour les composantes son.

$f_A{}^e$ ⊢——⊣→ $f_A = 14,13\overline{81}$ MHz

FIG.1a

EP 0 683 607 B1

FIG.1b

FBAS$_{TT}$ →[ A/D ] →[ VV ]

$f_A^e$

FUTV

⊗ → [ DMF ] → FBAS

$-f_{BT}$

[ AFC/PLL1 ]

FUT1    DZ1    FMDE1

⊗ → [ ↓30 ] → [ FMDE1 ] → [ ↓DZ3 ] → T1

$-(f_{BT} + f_{T1})$

[ AFC2 ]

DMT1

DMT2

FUT2    DZ2    FMDE2

⊗ → [ ↓30 ] → [ FMDE2 ] → [ ↓DZ4 ] → T2

$-(f_{BT} + f_{T2})$

[ AFC3 ]

MSZ

[ ID ]

EP 0 683 607 B1

EP 0 683 607 B1

TV-ZF
FBAS$_{TT}$ ○——— AAF ——— A / D ——— RBF ——— ↓2 CHBFT ⟹ TV-Demod.
Ton-Demod.

$f_A^e$
= 28,27$\overline{63}$ MHz

$f_A^e$

$f_A$ = 14,13$\overline{81}$ MHz

FIG. 2a

FIG. 2b

$-(f_{BT} + 1/2[f_{T1} + f_{T2}])$

EP 0 683 607 B1

14

FIG.3a

TV-ZF
FBAS_TT

AAF —— A/D —— ↓2 CHBFT —— [ RTP3 / RTP4 ] ⟹

$f_A^e = 28,27\overline{63}\,\text{MHz}$

$f_A = 14,13\overline{81}\,\text{MHz}$

FIG.5

Re > —— RTP 3 —— (+/−) —— Re
     —— RTP 4
     —— RTP 4
Im > —— RTP 3 —— (+/+) —— Im

EP 0 683 607 B1

15

EP 0 683 607 B1

FIG.3b

16

EP 0 683 607 B1

## FIG. 4(a)

$FBAS_{TT}$

$|H_{CHBFT}|$

33,07  nom 6,58 MHz  39,65

$16,0\overline{27}$  nom 6,58 MHz  $23,48\overline{27}$

$|H_{CHBT}|$

1

1/2

BT

1/2

BT

1/2

$f_A^e$

38,9

$3/2 f_A^e$

$16,697727$  7 MHz

$2f_A^e$

1/2

f [MHz]

## FIG. 4(b)

$FBAS_{TT}$

$2,76\overline{45}$

$9,35\overline{45}$

CHBFT

BT

T T

$3,51\overline{45}$  $f_0 = 6,059\overline{54}$

$1/2 f_A^{e'} = 14,13818$

f [MHz]

FIG. 6

EP 0 683 607 B1